# EUROPEAN PATENT SPECIFICATION

(11) **EP 2 735 514 B1**
(45) Date of publication and mention of the grant of the patent: **09.09.2015**
(21) Application number: 12194401.1
(22) Date of filing: 27.11.2012
(51) Int. Cl.: B65B 39/10, A22C 11/02

(54) **Filling tube assembly**
Füllrohranordnung
Ensemble tube de remplissage

(43) Date of publication of application: 28.05.2014
(73) Proprietor: Poly-clip System GmbH & Co. KG, 65795 Hattersheim (DE)
(72) Inventor: Sames, Jörg, 35418 Alten Buseck (DE)
(74) Representative: Eisenführ Speiser

(56) References cited:
- EP-A1- 0 025 923
- EP-A1- 0 075 933
- US-A- 3 263 712
- US-A- 4 437 209
- US-A1- 2008 311 835
- US-B1- 6 641 474

## Description

The present invention relates to a filling tube assembly for an apparatus for filling and closing a tubular or bag-shaped packaging casing, like a clipping machine, according to the preamble of claim 1.

The filling tube assembly comprises a first filling tube and at least a second filling tube each having a first end, a second end and a longitudinal axis extending between the first and the second end, for accommodating a tubular or bag-shaped packaging casing for feeding filling material in a feeding direction into a tubular or bag-shaped packaging casing stored on at least one of said filling tubes and closed at the end facing in the feeding direction by a closure means, like a closure clip. The filling tube assembly further comprises a revolver device for selectively coupling the first and the at least second filling tube to a filling machine by moving the respective filling tube into a filling position, the revolver device comprises a revolver plate having a revolver axis which extends substantially vertically to said revolver plate in the feeding direction, and about which the revolver plate is rotatable. The first and the at least second filling tube are at tached to the revolver plate by their second ends, and extend from the revolver plate in the feeding direction.

In practice, it is known that, for example in the production of sausage-shaped products, like sausages, filling material is fed by a filling machine through a filling tube of a clipping machine into a tubular or bag-shaped packaging casing which is stored on the filling tube and which is closed at its front end, i.e. the end pointing facing in the feeding direction of the filling material by a closure means, like a closure clip. The tubular or bag-shaped packaging casing is pulled-off from the filling tube by the feeding pressure while being filled.

It is further known that a clipping machine for producing said sausage-shaped products may comprise a filing tube assembly which includes more than one filling tube, i.e. two filling tubes which are attached to a revolver device. By means of the revolver device, said filling tubes may reversably be moved between a filling position, in which filling material is fed through the first filling tube into a tubular or bag-shaped packaging casing stored on said first filling tube, and a refill position, in which, simultaneously to the filling process, tubular or bag-shaped packaging casing may be refilled to the second filling tube. A clipping machine for producing sausages which comprises such a known filling tube assembly, is disclosed in the German laid open document DE 32 23 725.

From EP patent application 0 025 923, a method and a device for producing sausages is known. The device comprises two filling tubes which are arranged on a revolver plate with one filling tube in a production position in which filling material is fed through the filling tube into a tubular casing material stored on the filling tube, and the other filling tube in a refill position in which tubular casing material is stored on the filing tube.

In this known clipping machine, a tubular packaging casing is refilled to a filling tube when this filling tube is in the refill position, by placing the tubular or bag-shaped casing on said filling tube with its closed end positioned in front of the outlet opening of the filling tube. During moving the filling tubes between the refill position and the filling position, particularly during shifting the filling tube to which a tubular or bag-shaped packaging casing has been refilled, from the refill position into the filling position, the tubular or bag-shaped casing just refilled to said filling tube, may be displaced, e.g. by partially slipping-off from the filling tube, which leads to a reduced quality of the sausage-shaped product or a damage of the tubular or bag-shaped casing during the filling process, and thus an additional effort in maintenance. Accordingly, an operator has to check whether the refilled tubular or bag-shaped casing is in a correct position.

Thus, it is an object of the present invention to provide a filling tube assembly which overcomes the above mentioned drawbacks and which ensures a secure as well as efficient production process.

According to the present invention, there is provided filling tube assembly for an apparatus for filling and closing a tubular or bag-shaped packaging casing, like a clipping machine. The filling tube assembly comprises a first filling tube and at least a second filling tube each having a first end, a second end and a longitudinal axis extending between the first and the second end, for accommodating a tubular or bag-shaped packaging casing for feeding filling material in a feeding direction into a tubular or bag-shaped packaging casing stored on at least one of said filling tubes and closed at the end facing in the feeding direction by a closure means, like a closure clip. The filling tube assembly further comprises a revolver device for selectively coupling the first and the at least second filling tube to a filling machine by moving the respective filling tube into a filling position, the revolver device comprises a revolver plate having a revolver axis which extends substantially vertically to said revolver plate in the feeding direction, and about which the revolver plate is rotatable. The first and the at least second filling tube are attached to the revolver plate by their second ends, and extend from the revolver plate in the feeding direction. In the inventive filling tube assembly, a first clamping device is provided on the revolver plate for securing the tubular or bag-shaped packaging casing in its position when stored on the first and/or the at least second filling tube.

The clamping device thereby securely prevents the tubular or bag-shaped packaging casing from slipping-off from the filling tube, in particular, when moved from the refill position into the filling position. As it will described later on, a clamping device can be provided for each filling tube. However, it is also possible to arrange one clamping device for two or more filling tubes. In such a case, the clamping device can be switched from one filling tube to the other(s), wherein the clamping device comprises a clamping element being arranged at the end of a moving or pivoting bar, respectively, so that the clamping element can be moved between the two ore more filling tubes. Moreover, the clamping element can have a shape which corresponds at least partially to the outer circumferential surface of each filling tube wherein the clamping element has this shape on two opposite sides of it which face in the direction of both filling tubes.

For a substantially linear alignment of the filling machine and the clipping machine, the longitudinal axes of the first and the at least second filling tube are aligned parallel to the revolver axis of the revolver device. Alternatively, the longitudinal axes of the first and the at least second filling tube are aligned in an acute angle to the revolver axis of the revolver device. In the latter case, the filing tube placed in the refill position, diverges from the filing tube placed in the filling position in a direction towards the operator, which eases the refilling of the tubular or bag-shaped packaging casing thereto.

In a preferred embodiment of the filling tube assembly, the first clamping device comprises a support element attached to the revolver plate, and a securing element attached to the support element. In this configuration, the first clamping device is in a defined position relative to the first and the at least second filling tube, also during the movement of the filling tubes.

Moreover, the position of the securing element of the first clamping device relative to the first and the at least second filling tube is adjustable. Thereby, the specific position of the securing element and the clamping force applied to the tubular or bag-shaped casing on the filling tube may be adjusted, e.g. in accordance with the kind of the casing material presently used. In this specific case, adjusting the position of the securing element of the first clamping device may also include the alternate positioning of the securing element relative to the first and the at least second filling tube, for alternately acting on the tubular or bag-shaped packaging casing on the first and the at least second filling tube.

In a further preferred embodiment of the filling tube assembly, a second clamping device is provided on the revolver plate for securing a tubular or bag-shaped packaging casing in its position when stored on the at least second filling tube. The first clamping device coacts with the first filling tube to which it is aligned. Thereby, the tubular or bag-shaped packaging casing on both, the first and the at least second filling tube, is secured in its position, also during the movement of the filling tubes.

In case that a second clamping device is provided, it has to be understood that, similarly to the first clamping device, also the second clamping device comprises a support element attached to the revolver plate, and a securing element attached to the support element. Accordingly, the position of the securing element of the second clamping device relative to the first and the at least second filling tube is adjustable.

According to an advantageous and simple construction of the first and the at least second clamping device, the support elements of the first and the at least second clamping device are support bolts each having a first end, a second end and a longitudinal axis, and being attached to the revolver plate by their second ends, wherein the longitudinal axes of the support bolts are aligned parallel to the longitudinal axes of the first and the at least second filling tube.

For allowing a secure engagement of the securing elements with the tubular or bag-shaped packaging casing without damaging said casing material, it is advantageous that the securing elements of the first and the at least second clamping device each comprise at least a resilient portion for engaging the tubular or bag-shaped packaging casing stored on the first and the at least second filling tube.

It is further advantageous that the first and the at least second clamping device comprise adjustment means for adjusting the radial distance between the resilient portion of a securing element and the respective filling tube, e.g. in accordance with the tubular or bag-shaped packaging casing material used, the diameter or the material of the filling tube.

In an advantageous configuration, the securing elements are resilient circular plates eccentrically attached to the first end of the respective support bolt by a screw and a nut, which constitutes a simple and inexpensive construction of an adjustment means for the securing elements.

For securing the tubular or bag-shaped packaging casing on the first and the at least second filling tube, the first and the at least second clamping device are in temporary engagement with the first and the at least second filling tube, respectively. That means, the first and the at least second clamping device are in engagement with the tubular or bag-shaped packaging casing at least during the movement of the filling tubes between the refill position and the filling position for preventing the casing material from being displaced. Alternatively, the first and the at least second clamping device may also be in permanent engagement with the first and the at least second filling tube, respectively.

Additionally to the first and the at least second filling tube, a third filling tube and a third clamping device may be provided. Naturally, the third clamping device should be of a construction similar to the first and the second clamping device, thereby providing the same advantages. A third filing tube provides a third filling tube position, like a check position, in which the correct positioning of the tubular or bag-shaped packaging casing on the filling tube may be checked.

It has to be understood that the filling tubes provided on the revolver plate, can be arranged in regular intervals and circularly around the revolver axis, for enabling regular rotation intervals.

Further advantages and a preferred embodiment will be described in the following together with the drawings listed below. The expressions "left", "right", "below" and "above" used in the following description, are referred to the drawings in an alignment such that the reference numbers and the notation of the Figs. used can be read in normal.

In the drawings:
- Fig. 1:: is a schematic and perspective view to an embodiment of a filling tube assembly according to the present invention;
- Fig. 2:: is a plan view of the filling tube assembly according to Fig. 1 when seen from above; and
- Fig. 3:: is a plan view of the filling tube assembly according to Fig. 1 when seen in a direction contrary to the feeding direction.

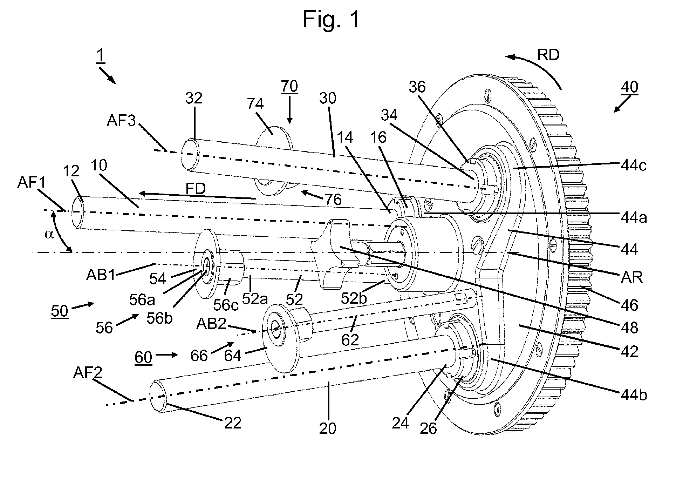

Fig. 1 shows an embodiment of a filling tube assembly 1 according to the present invention. Filling tube assembly 1 comprises a first filling tube 10 which has a first end 12, a second end 14 and a longitudinal axis AF1. Filling tube assembly 1 further comprises a second filling tube 20 which has a first end 22, a second end 24 and a longitudinal axis AF2, and a third filling tube 30 which has a first end 32, a second end 34 and a longitudinal axis AF3. Filling tubes 10; 20; 30 are used for guiding and feeding a filling material in tubular or bag-shaped casings arranged alternately on them. The filling material is fed in a feeding direction FD from second ends 14; 24; 34 to first ends 12; 22; 32 of each filling tube 10; 20; 30, respectively.

Filling tube assembly 1 includes a revolver device 40 which comprises a circular revolver plate 42 having a rotation axis AR. Rotation axis AR of revolver plate 42 extends centrically and vertically from revolver plate 42 and is horizontally aligned relative to a clipping machine when connected thereto. Revolver device 40 further comprises an approximately three-lobular socket 44 which is arranged centrally on revolver plate 42, which faces in the feeding direction FD and which can also be described as having the shape of a shamrock including three leaves. Three-lobular socket 44 has three lobes 44a, 44b, 44c, which are arranged in regular intervals around rotation axis AR of revolver plate 42. For rotating revolver plate 42 around rotation axis AR in a rotation direction RD, revolver device 40 comprises a gear rim 46 arranged on the outer circumference of revolver plate 42. In order to couple or decouple filling tube assembly 1 to or from a filling machine (not shown), a coupling device 48 is provided centrally on revolver plate 42, including a handle and a screw for screwing and unscrewing filling tube assembly 1.

As it can be seen in Fig. 1, first, second and third filling tube 10; 20; 30 are attached to one of the lobes 44a;, 44b; 44c of three-lobular socket 44 by their second ends 12; 22; 32.

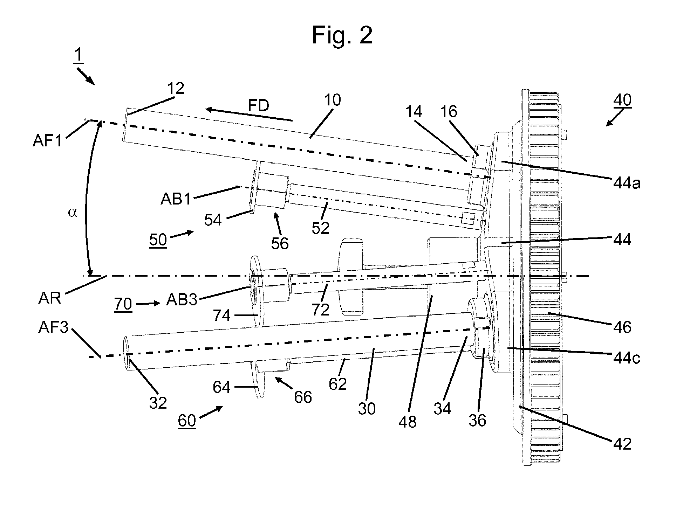

First filling tube 10, according to Fig. 1, is positioned in the filling position in which filling material is fed through filling tube 10 into a not shown tubular or bag-shaped packaging casing stored on filling tube 10, wherein first filling tube 10 extends in feeding direction FD. Longitudinal axis AF1 of first filling tube 10 and rotation axis AR of revolver device 40 are arranged in a common horizontal plane and are not aligned parallel to each other, but encompass an acute angle α therebetween (see also Fig. 2). First filling tube 10 is mounted to lobe 44a of three-lobular socket 44 by its second end 12 by means of a sleeve nut 16 matching with a respective screw in lobe 44a of three-lobular socket 44.

Second filling tube 20, according to Fig. 1, is positioned in the refill position in which a not shown tubular or bag-shape packaging casing is refilled onto filling tube 20. Longitudinal axis AF2 of second filling tube 20 and rotation axis AR of revolver device 40 are also not aligned parallel to each other, but encompass an acute angle of the same size as angle α therebetween. Thus, second filling tube 20 faces towards an operator standing in front of the clipping machine or the filling tube assembly 1 for refilling tubular or bag-shaped packaging casing. Second filling tube 20 is mounted to lobe 44b of three-lobular socket 44 by its second end 22 by means of a sleeve nut 26 matching with a respective screw in lobe 44b of three-lobular socket 44.

Third filling tube 30, as shown in Fig. 1, is in a third position, in which the operator may check the correct placement of the tubular or bag-shaped packaging casing after being refilled in the refill position to third filling tube 30. Third filling tube extends from lobe 44c of three-lobular socket 44 to which it is attached by its second end 32 by means of a sleeve nut 36 matching with a respective screw in lobe 44c of three-lobular socket 44. Longitudinal axis AF3 of third filling tube 30 and rotation axis AR of revolver device 40 also encompass an acute angle of the same size as angle α therebetween.

As it further can be seen in Fig. 1, filling tube assembly 1 comprises a first clamping device 50, a second clamping device 60 and a third clamping device 70. First clamping device 50 is associated with first filling tube 10, second clamping device 60 is associated with second filling tube 20, and third clamping device 70 is associated with third filling tube 30. First, second and third clamping devices 50; 60; 70 are of identical construction. Thus, in the following, first clamping device 50 will representatively be explained in detail.

First clamping device 50 cooperates with first filling tube 10, and comprises a support element in the form of a support bolt 52. Support bolt 52 has a first end 52a and a second end 52b, and is attached to lobe 44a of three-lobular socket 44 by its second end 52b. Support bolt or bolt 52 has a longitudinal axis AB1 which extends between first and second end 52a, 52b of bolt 52. Axis AB1 of bolt 52 is aligned approximately parallel to axis AF1 of first filling tube 10. First clamping device 50 further comprises a securing element 54 in the form of a circular plate. Securing element or circular plate 54 is made of a resilient material, such as a suitable plastic or rubber. Circular plate 54 comprises an eccentrically arranged through-hole by means of which it is eccentrically attached to first end 52a of bolt 52, and in a plane vertically to longitudinal axis AB1 of bolt 52.

An adjustment means 56 is provided for adjusting and fixing circular plate 54 in its position relative to first filling tube 10. Adjustment means 56 includes a screw 56a, a shim 56b and a counter nut 56c. Counter nut 56c is screwed on an outer screw on first end 52a of bolt 52. Screw 56a together with shim 56b is guided through an eccentrically provided through-hole in shim 54 and screwed into an inner screw coaxially arranged with axis AB1 in first end 52a of bolt 52. For fixing shim 54 in a desired position relative to first filling tube 10, counter nut 56c is screwed against shim 56b.

As mentioned above, second clamping device 60 which cooperates with second filling tube 20, and third clamping device 70 (see Fig. 2) which cooperates with third filling tube 30, are of a similar construction as explained in conjunction with first clamping device 50. That means, second clamping device 60 comprises a support bolt 62 and a securing element or circular plate 64 eccentrically attached to the first end of support bolt 62 which is mounted to lobe 44b of three-lobular socket 44 by its second end 62b. Support bolt 62 of second clamping device 60 has a longitudinal axis AB2 which is aligned parallel to axis AF2 of second filling tube 20. Accordingly, third clamping device 70 comprises a support bolt 72 and a securing element or circular plate 74 eccentrically attached to the first end of support bolt 72 which is mounted to lobe 44c of three-lobular socket 44 by its second end 72b. Support bolt 72 of second clamping device 70 has a longitudinal axis AB3 which is aligned parallel to axis AF3 of third filling tube 30.

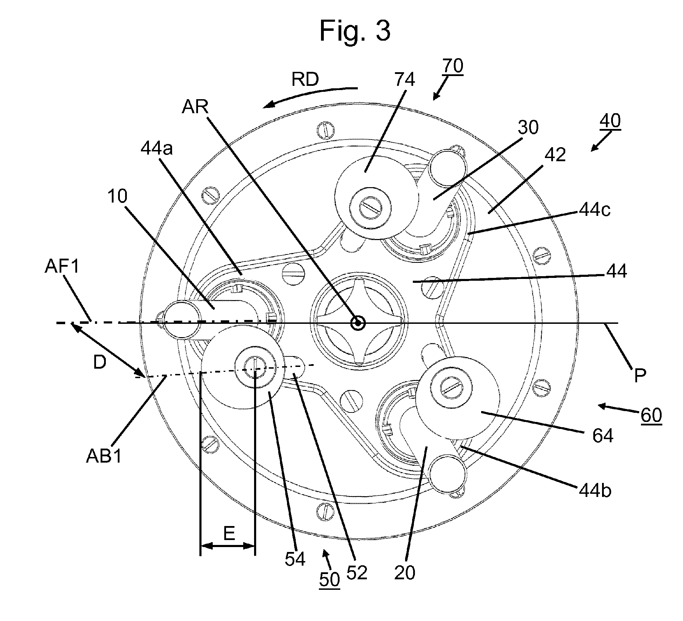

Fig. 2 is a plan view of the filling tube assembly according to Fig. 1 seen from above and vertically to a plane P extending through longitudinally axis AF1 of first filling tube 10 and rotation axis AR of revolver device 40 (see Fig. 3), and with first filling tube 10 in the filling position. In the filling position, longitudinal axis AF1 of first filling tube 10 extends in feeding direction FD. As it can be seen in Fig. 2, rotation axis AR of revolver device 40 is vertically aligned to revolver plate 42. Longitudinal axis AF1 of first filling tube 10 and rotation axis AR of revolver device 40 encompass an acute angle α therebetween.

As it further can be seen in Fig. 2, longitudinal axis AF3 of third filling tube 30 also encompasses an acute angle with rotation axis AR of revolver device 40. Thus, third filling tube 30, and second filling tube 20 which is not visible in Fig. 2 since it is covered by third filling tube 30, extends towards the front side of the clipping machine (the lower end of Fig. 2) in an angle larger than acute angle α. Accordingly, an operator may easily refill a tubular or bag-shaped packaging casing to second filling tube 20 and, may also easily check the correct positioning of the refilled tubular or bag-shaped packaging casing on third filling tube 30.

Fig. 3 is a plan view of the filling tube assembly according to Fig. 1 when seen in a direction contrary to the feeding direction FD and vertically to revolver plate 42.

When first filling tube 10 is in the filling position, longitudinal axis AF1 and rotation axis AR of revolver device 40 span common horizontal plane P. First, second and third filling tubes 10; 20; 30 are arranged in regular intervals around rotation axis AR of revolver device 40. Accordingly, second ad third filling tubes 20; 30, when in the refill position and in the check position, are aligned vertically above each other, and in equal distance above horizontal plane P, in a check position, and below horizontal plane P, in the refill position.

First, second and third clamping devices 50; 60; 70, and in particular, support bolts 52; 62; 72, are arranged laterally to first, second and third filling tubes 10; 20; 30 with a distance D between their longitudinal axis AF1; AF2; AF3 and AB1; AB2; AB3, respectively. Securing elements 54; 64; 74 are in a position as to be just in contact with the outer surface of filling tubes 10; 20; 30.

Securing elements 54; 64; 74 are eccentrically attached to the first ends 52a; 62a; 72a of support bolts 52; 62; 72. As exemplarily explained in conjunction with first clamping device 50, a maximum eccentricity E in a direction vertically to longitudinal axis AB1 of support bolt 52, is provided between longitudinal axis AB1 and the outermost portion of securing element 54. Maximum eccentricity E is larger than the radial distance between the outer surface of first filling tube 10 and the longitudinal axis AB1 of support bolt 52. That means, starting from a position as shown in Fig. 3, securing element 54, when adjustment means 56 is loosened, may be further rotated in clockwise direction. Thereby, resilient securing element 54 is bent along the outer surface of first filling tube 10. Thus, the contact surface of securing element 54 with first filling tube 10, and a tubular or bag-shaped packaging casing stored on first filling tube 10, enlarges. Accordingly, also the frictional force applied to the tubular or bag-shaped packaging casing stored on first filling tube 10 enlarges.

It has to be understood, that the radial distance between longitudinal axes AF2; AF3 and AB2; AB3 and the eccentricity E of the second and third securing element 64, 74 is equal to that of first securing element 54, and thus, the position of the second and third securing element 64; 74 is adjusted accordingly.

For producing of sausage-shaped products, a filling material, like sausage meat, is fed through a filling tube into a tubular or bag-shaped packaging casing which is stored on said filling tube, and which is closed at one end. By means of the feeding pressure, the tubular or bag-shaped packaging casing is pulled-off from the filling tube while being filled. If a predetermined amount of filling material is fed into the tubular or bag-shaped packaging casing, the filled tubular or bag-shaped packaging casing is gathered by respective gathering means, thereby forming a plait-like portion to the tubular or bag-shaped packaging casing, and closed by applying a closure means, like a closure clip, to the plate-like portion.

When using a filling tube assembly 1 according to the present invention, before starting the filling process, on none of the first, second or third filling tubes 10; 20, 30 a tubular or bag-shaped packaging casing is stored.

In this situation, first filling tube 10 is brought into the refill position. In this position, a predetermined amount of tubular or bag-shaped packaging casing is stored on first filling tube 10. Second and third filling tube 20; 30 are in the check position and the filling position respectively. After a tubular or bag-shaped packaging casing has been stored on first filling tube 10, revolver device 40 is rotated about an angle of 120° counterclockwise in rotation direction RD. Thereby, first filling tube 10 is moved into the check position, whereas second filling tube 20 and third filling tube 30 are moved into the refill position and the filling position, respectively. Further, after a tubular or bag-shaped packaging casing has been stored on second filling tube 20, which presently is in the refill position, and the correct positioning of the tubular or bag-shaped packaging casing on first filling tube 10 has been checked, revolver device 40 is rotated about an angle of 120° counterclockwise in rotation direction RD. Thereby, first filling tube 10 is moved into the filling position, whereas second filling tube 20 and third filling tube 30 are moved into the check position and the refill position, respectively.

Immediately after moving first filling tube 10 into the filling position as shown in Fig. 1, the filling process may be started.

During the filling process of the tubular or bag-shaped packaging casing stored on first filling tube 10" tubular or bag-shaped packaging casing may be stored on third filling tube 30 and the positioning of the tubular or bag-shaped packaging casing stored on second filling tube 20 may be checked.

After the complete tubular or bag-shaped packaging casing stored on first filling tube 10, has been used, the filling process is stopped, revolver device 40 is rotated about an angle of 120° counterclockwise in rotation direction RD and, while the tubular or bag-shaped packaging casing stored on second filling tube 20 is filled, new tubular or bag-shaped packaging casing may be stored on first filling tube 10.

During refilling of a tubular or bag-shaped packaging casing to first filling tube 10, the tubular casing portion is moved along first filling tube 10 and between the outer surface of filling tube 10 and securing element 54 of first clamping device 50, which thereby applies a clamping force to the tubular or bag-shaped packaging casing arranged on filling tube 10. The clamping force is adjusted as to surely secure the tubular or bag-shaped packaging casing on filling tube 10 without damaging the casing material.

By means of first clamping device 50, the tubular or bag-shaped packaging casing may be secured in its desired position, also during moving first filling tube 10 from the refill position via the check position into the filling position.

For adjusting a respective clamping force, counter nut 56c is loosened and securing element 54 is rotated about axis AB1 of support bolt 52. When brought in the desired position, securing element 54 is fixed in this position by screwing counter nut 56c against shim 56b hold by screw 56a of adjustment means 56.

It has to be understood that, when using a sensitive casing material, a respective lower clamping force has to be adjusted, for preventing damaging the casing material.

Moreover, similar to the adjustment of the clamping force of first clamping device 50, the clamping force of the second and third clamping devices 60; 70 may be adjusted.

In case that different casing material is used, or in case that the quality of the casing material varies during the production process, the clamping force adjusted to the first, second and third clamping devices 50; 60; 70 may also be varied.

In the embodiment of the filling tube assembly according to Figs. 1 to 3, three filling tubes 10, 20, 30 are provided, to each of which a clamping device 50; 60; 70 is associated. Naturally, a filling tube assembly may also comprise only two filling tubes and two clamping devices, respectively. Naturally, a filling tube assembly may also comprise more than three filling tubes, e.g. four filling tubes, with each of which a clamping device according to the present invention is associated.

Conventionally, tubular or bag-shaped packaging casing which is stored on a filling tube, has a length which allows the production of a large number of sausage-shaped products. But, in specific cases, short, pre-manufactured tubular or bag-shaped packaging casing sections for single sausages are filled. Also in these cases, the filling tube assembly according to the present invention surely secures this sort casing section in their position on the filling tube.

For rotating the filling tube assembly about the rotation axis of the revolver device, according to the present embodiment, a gear rim is arranged at the outer circumference of the revolver plate. It has to be understood that a gear rim is only one example of a suitable drive device. Alternatively, a belt drive may be provided, and the revolver plate comprises a respective pulley.

In case of an automated drive for the revolver device, said drive may be coupled to and controlled by a respective control unit.

Naturally, manually rotating the filling tube assembly is possible. In this case, a respective handle should be provided.

## Claims

1. A filling tube assembly for an apparatus for filling and closing a tubular or bag-shaped packaging casing, like a clipping machine, the filling tube assembly (1) comprises:
a first filling tube (10) and at least a second filling tube (20) each having a first end (12; 22), a second end (14; 24) and a longitudinal axis (AF1; AF2) extending between the first and the second end (12,14; 22, 24), for accommodating a tubular or bag-shaped packaging casing for feeding filling material in a feeding direction (FD) into a tubular or bag-shaped packaging casing stored on at least one of said filling tubes (10; 20) and closed at the end facing in the feeding direction (FD) by a closure means, like a closure clip, and
a revolver device (40) for selectively coupling the first and the at least second filling tube (10; 20) to a filling machine by moving the respective filling tube (10; 20) into a filling position, the revolver device (40) comprises a revolver plate (42) having a revolver axis (AR) which extends substantially vertically to said revolver plate (42) in the feeding direction (FD), and about which the revolver plate (42) is rotatable,
wherein the first and the at least second filling tube (10; 20) are attached to the revolver plate (42) by their second ends (14, 24), and extend from the revolver plate (42) in the feeding direction (FD),
**characterized in that** a first clamping device (50) is provided on the revolver plate (42) for securing a tubular or bag-shaped packaging casing in its position when stored on the first and/or the at least second filling tube (10; 20).

2. The filling tube assembly according to claim 1,
wherein the longitudinal axes (AF1; AF2) of the first and the at least second filling tube (10; 20) are aligned parallel to the revolver axis (AR) of the revolver device (40).

3. The filling tube assembly according to claim 1,
wherein the longitudinal axes (AF1; AF2) of the first and the at least second filling tube (10; 20) are aligned in an acute angle to the revolver axis (AR) of the revolver device (40).

4. The filling tube assembly according to any of claims 1 to 3,
wherein the first clamping device (50) comprises a support element (52) attached to the revolver plate (42), and a securing element (54) attached to the support element (52).

5. The filling tube assembly according to claim 4,
wherein the position of the securing element (54) of the first clamping device (50) relative to the first and the at least second filling tube (10; 20) is adjustable.

6. The filling tube assembly according to any of claims 1 to 5,
wherein a second clamping device (60) is provided on the revolver plate (42) for securing a tubular or bag-shaped packaging casing in its position when stored on the at least second filling tube (20).

7. The filling tube assembly according to claim 4,
wherein the second clamping device (60) comprises a support element (62) attached to the revolver plate (42), and a securing element (64) attached to the support element (62).

8. The filling tube assembly according to claim 7,
wherein the position of the securing element (64) of the second clamping device (60) relative to the first and the at least second filling tube (10; 20) is adjustable.

9. The filling tube assembly according to any of claims 4 to 8,
wherein the support elements (52; 62) of the first and the at least second clamping device (50; 60) are support bolts each having a first end (52a; 62a), a second end (52b; 62b) and a longitudinal axis (AB1; AB2), and being attached to the revolver plate (42) by their second ends (52b; 62b), and wherein the longitudinal axes (AB1; AB2) of the support bolt (52; 62) are aligned parallel to the longitudinal axes (AF1, AF2) of the first and the at least second filling tube (10; 20).

10. The filling tube assembly according to any of claims 4 to 9,
wherein the securing elements (54; 64) of the first and the at least second clamping device (50; 60) each comprise at least a resilient portion for engaging the tubular or bag-shaped packaging casing stored on the first and the at least second filling tube (10; 20).

11. The filling tube assembly according to claim 10,
wherein the first and the at least second clamping device (50; 60) comprise adjustment means (56; 66) for adjusting the radial distance between the resilient portion of a securing element (54; 64) and the respective filling tube (10; 20).

12. The filling tube assembly according to claim 10,
wherein the securing elements (54; 64) are resilient circular plates eccentrically attached to the first end of the respective support bolt (52; 62) by a screw (56a; 66a) and a nut (56b; 66b).

13. The filling tube assembly according to any of claims 6 to 12,
wherein the first and the at least second clamping device (50; 60) are in temporary engagement with the first and the at least second filling tube (10; 20), respectively.

14. The filling tube assembly according to any of claim 6 to 12,
wherein the first and the at least second clamping device (50; 60) are in permanent engagement with the first and the at least second filling tube (10; 20), respectively.

15. The filling tube assembly according to any of claims 1 to 14,
wherein a third filling tube (30) and a third clamping device (70) are provided, wherein the third clamping device (70) is designed according to the construction of the first and/or second clamping device (50; 60) of any of claims 1 to 14.

## Patentansprüche

1. Füllrohrbaugruppe für eine Vorrichtung zum Füllen und Verschließen von rohr- oder beutelförmigen Verpackungshüllen, wie eine Clipmaschine, wobei die Füllrohrbaugruppe (1) enthält:
ein erstes Füllrohr (10) und zumindest ein zweites Füllrohr (20), die jeweils ein erstes Ende (12; 22) und ein zweites Ende (14; 24) sowie eine Längsachse (AF1; AF2), welche sich zwischen dem ersten sowie dem zweiten Ende (12, 14; 22, 24) erstreckt, aufweisen, zum Aufnehmen einer rohr- oder beutelförmigen Verpackungshülle für ein Zuführen von Füllmaterial in einer Zuführrichtung (FD) in eine rohr- oder beutelförmige Verpackungshülle, die auf zumindest einem der Füllrohre (10; 20) gespeichert ist und die an dem in die Zuführrichtung (FD) weisenden Ende durch ein Verschlussmittel, wie einen Verschlussclip, verschlossen ist, und
eine Revolvereinrichtung (40) zum selektiven Verbinden des ersten und des zumindest zweiten Füllrohrs (10; 20) mit einer Füllmaschine durch Bewegen des jeweiligen Füllrohrs (10; 20) in eine Füllposition, wobei die Revolvereinrichtung (40) eine Revolverplatte (42) enthält, die eine Revolverachse (AR) aufweist, welche sich im Wesentlichen vertikal zu der Revolverplatte (42) in die Zuführrichtung (FD) erstreckt, und um welche die Revolverplatte (42) drehbar ist,
wobei das erste sowie das zumindest zweite Füllrohr (10; 20) an der Revolverplatte (42) über ihre zweiten Enden (14, 24) angebracht sind und sich von der Revolverplatte (42) in die Zuführrichtung (FD) erstrecken,
**dadurch gekennzeichnet, dass** eine erste Klemmeinrichtung (50) an der Revolverplatte (42) zum Sichern einer rohr- oder beutelförmigen Verpackungshülle in ihrer Position vorgesehen ist, wenn es auf dem ersten und/oder dem zumindest zweiten Füllrohr (10; 20) gespeichert ist.

2. Füllrohrbaugruppe nach Anspruch 1,
wobei die Längsachsen (AF1; AF2) des ersten und des zumindest zweiten Füllrohrs (10; 20) parallel zu der Revolverachse (AR) der Revolvereinrichtung (40) ausgerichtet sind.

3. Füllrohrbaugruppe nach Anspruch 1,
wobei die Längsachsen (AF1; AF2) des ersten und des zumindest zweiten Füllrohrs (10; 20) in einem spitzen Winkel zu der Revolverachse (AR) der Revolvereinrichtung (40) ausgerichtet sind.

4. Füllrohrbaugruppe nach einem der Ansprüche 1 bis 3,
wobei die erste Klemmeinrichtung (50) ein Stützelement (52), das an der Revolverplatte (42) angebracht ist, und ein Sicherungselement (54), welches an dem Stützelement (52) angebracht ist, enthält.

5. Füllrohrbaugruppe nach Anspruch 4,
wobei die Position des Sicherungselements (54) der ersten Klemmeinrichtung (50) relativ zu dem ersten und dem zumindest zweiten Füllrohr (10; 20) einstellbar ist.

6. Füllrohrbaugruppe nach einem der Ansprüche 1 bis 5,
wobei eine zweite Klemmeinrichtung (60) an der Revolverplatte (42) zum Sichern einer rohr- oder beutelförmigen Verpackungshülle in ihrer Position vorgesehen ist, wenn es auf dem zumindest zweiten Füllrohr (20) gespeichert ist.

7. Füllrohrbaugruppe nach Anspruch 4,
wobei die zweite Klemmeinrichtung (60) ein Stützelement (62), das an der Revolverplatte (42) angebracht ist, und ein Sicherungselement (64), welches an dem Stützelement (62) angebracht ist, enthält.

8. Füllrohrbaugruppe nach Anspruch 7,
wobei die Position des Sicherungselements (64) der zweiten Klemmeinrichtung (60) relativ zu dem ersten und dem zumindest zweiten Füllrohr (10; 20) einstellbar ist.

9. Füllrohrbaugruppe nach einem der Ansprüche 4 bis 8,
wobei die Stützelemente (52; 62) der ersten und der zumindest zweiten Klemmeinrichtung (50; 60) Stützbolzen sind, die jeweils ein erstes Ende (52a; 62a), ein zweites Ende (52b; 62b) sowie eine Längsachse (AB1; AB2) aufweisen, und an der Revolverplatte (42) über ihre zweiten Enden (52b; 62b) angebracht sind, und wobei die Längsachsen (AB1; AB2) der Stützbolzen (52; 62) parallel zu den Längsachsen (AF1, AF2) des ersten sowie des zumindest zweiten Füllrohrs (10; 20) ausgerichtet sind.

10. Füllrohrbaugruppe nach einem der Ansprüche 4 bis 9,
wobei die Sicherungselemente (54; 64) der ersten und der zumindest zweiten Klemmeinrichtung (50; 60) jeweils zumindest einen elastischen Bereich für einen Eingriff mit der rohr- oder beutelförmigen Verpackungshülle, die auf dem ersten sowie dem zumindest zweiten Füllrohr (10; 20) gespeichert ist, enthalten.

11. Füllrohrbaugruppe nach Anspruch 10,
wobei die erste und die zumindest zweite Klemmeinrichtung (50; 60) Einstellmittel (56; 66) zum Einstellen des radialen Abstands zwischen dem elastischen Bereich eines Sicherungselementes (54; 64) sowie dem jeweiligen Füllrohr (10; 20) enthalten.

12. Füllrohrbaugruppe nach Anspruch 10,
wobei die Sicherungselemente (54; 64) elastische, kreisförmige Scheiben sind, die exzentrisch an dem ersten Ende des jeweiligen Stützbolzens (52; 62) durch eine Schraube (56a; 66a) und eine Mutter (56b; 66b) angebracht sind.

13. Füllrohrbaugruppe nach einem der Ansprüche 6 bis 12,
wobei die erste und die zumindest zweite Klemmeinrichtung (50; 60) jeweils in vorübergehendem Eingriff mit dem ersten sowie dem zumindest zweiten Füllrohr (10; 20) gelangen.

14. Füllrohrbaugruppe nach einem der Ansprüche 6 bis 12,
wobei die erste und die zumindest zweite Klemmeinrichtung (50; 60) jeweils in ständigem Eingriff mit dem ersten sowie dem zumindest zweiten Füllrohr (10; 20) sind.

15. Füllrohrbaugruppe nach einem der Ansprüche 1 bis 14,
wobei ein drittes Füllrohr (30) und eine dritte Klemmeinrichtung (70) vorgesehen sind, wobei die dritte Klemmeinrichtung (70) gemäß der Konstruktion der ersten und/oder zweiten Klemmeinrichtung (50; 60) nach einem der Ansprüche 1 bis 14 ausgestaltet ist.

## Revendications

1. Ensemble de tubes d'embossage pour une installation d'embossage et de fermeture d'une enveloppe de conditionnement tubulaire ou en forme de sachet, comme une machine d'agrafage, l'ensemble (1) de tube d'embossage comprenant:
un premier tube (10) d'embossage et au moins un deuxième tube (20) d'embossage, ayant chacun une première extrémité (12; 22) et une seconde extrémité (14; 24) et un axe (AF1; AF2) longitudinal s'étendant entre la première et la seconde extrémités (12, 14; 22, 24), pour recevoir une enveloppe de conditionnement tubulaire ou en forme de sachet pour alimenter en une matière d'embossage dans un sens (FD) d'alimentation une enveloppe de conditionnement tubulaire ou en forme de sachet emmagasinée sur au moins l'un des tubes (10; 20) d'embossage et fermée à l'extrémité faisant face au sens (FD) d'alimentation par un moyen de fermeture, comme une agrafe de fermeture et
un dispositif (40) revolver pour adjoindre le premier et le au moins un deuxième tubes (10; 20) d'embossage à une machine d'embossage, en mettant le tube (10; 20) d'embossage respectif dans une position d'embossage, le dispositif (40) revolver comprenant une plaque (42) de revolver ayant un axe (AR) de revolver, qui s'étend sensiblement verticalement par rapport à la plaque (42) de revolver dans le sens (FD) d'alimentation et autour duquel la plaque (42) de revolver est tournante,
dans lequel le premier et le au moins un deuxième tubes (10; 20) d'embossage sont fixés à la plaque (42) de revolver par leurs secondes extrémités (14, 24) et partent de la plaque (42) de revolver dans le sens (FD) d'alimentation,
**caractérisé en ce qu'**un premier dispositif (50) de serrage est prévu sur la plaque (42) de revolver pour fixer l'enveloppe de conditionnement tubulaire ou en forme de sachet dans sa position, lorsqu'elle est emmagasinée sur le premier et/ou le au moins un deuxième tubes (10; 20) d'embossage.

2. Ensemble de tubes d'embossage suivant la revendication 1,
dans lequel les axes (AF1; AF2) longitudinaux du premier et du au moins un deuxième tubes (10; 20) d'embossage sont alignés parallèlement à l'axe (AR) de revolver du dispositif (40) de revolver.

3. Ensemble de tubes d'embossage suivant la revendication 1,
dans lequel les axes (AF1; AF2) longitudinaux du premier et du au moins un deuxième tubes (10; 20) d'embossage sont alignés en faisant un angle aigu avec l'axe (AR) de revolver du dispositif (40) de revolver.

4. Ensemble de tubes d'embossage suivant l'une quelconque des revendications 1 à 3,
dans lequel le premier dispositif (50) de serrage comprend un élément (52) de support fixé à la plaque (42) de revolver et un élément (54) de fixation fixé à l'élément (52) de support.

5. Ensemble de tubes d'embossage suivant la revendication 4,
dans lequel la position de l'élément (54) de fixation du premier dispositif (50) de serrage, par rapport au premier et au au moins un deuxième tubes (10; 20) d'embossage, est réglable.

6. Ensemble de tubes d'embossage suivant l'une quelconque des revendications 1 à 5,
dans lequel un deuxième dispositif (60) de serrage est prévu sur la plaque (42) de revolver pour fixer une enveloppe de conditionnement tubulaire ou en forme de sachet en sa position, lorsqu'elle est emmagasinée sur le au moins un deuxième tube (20) d'embossage.

7. Ensemble de tubes d'embossage suivant la revendication 4,
dans lequel le deuxième dispositif (60) de serrage comprend un élément (62) de support fixé à la plaque (42) de revolver et un élément (64) de fixation fixé à l'élément (62) de support.

8. Ensemble de tubes d'embossage suivant la revendication 7,
dans lequel la position de l'élément (64) de fixation du deuxième dispositif (60) de serrage, par rapport au premier et au au moins un deuxième tubes (10; 20) d'embossage, est réglable.

9. Ensemble de tubes d'embossage suivant l'une quelconque des revendications 4 à 8,
dans lequel les éléments (52; 62) de support du premier et du au moins un deuxième dispositifs (50; 60) de serrage sont des axes de support ayant chacun une première extrémité (52a; 62a) et une seconde extrémité (52b; 62b) et un axe (AB1; AB2) longitudinal et sont fixés à la plaque (42) de revolver par leurs secondes extrémités (52b; 62b), les axes (AB1; AB2) longitudinaux de l'axe (52; 62) de support étant alignés parallèlement aux axes (AF1; AF2) longitudinaux du premier et du au moins un deuxième tubes (10; 20) d'embossage.

10. Ensemble de tubes d'embossage suivant l'une quelconque des revendications 4 à 9,
dans lequel les éléments (54; 64) de fixation du premier et du au moins un deuxième dispositifs (50; 60) de serrage comprennent chacun au moins une partie élastique pour coopérer avec l'enveloppe de conditionnement tubulaire ou en forme de sachet emmagasinée sur le premier et sur le au moins un deuxième tubes (10; 20) d'embossage.

11. Ensemble de tubes d'embossage suivant la revendication 10,
dans lequel le premier et le au moins un deuxième dispositifs (50; 60) de serrage comprennent des moyens (56; 66) de réglage pour régler la distance radiale entre la partie élastique d'un élément (54; 64) de fixation et le tube (10; 20) d'embossage respectif.

12. Ensemble de tubes d'embossage suivant la revendication 10,
dans lequel les éléments (54; 64) de fixation sont des plaques circulaires élastiques fixées excentriquement à la première extrémité de l'axe (52; 62) de support respectif par une vis (56a; 66a) et par un écrou (56b; 66b).

13. Ensemble de tubes d'embossage suivant l'une quelconque des revendications 6 à 12,
dans lequel le premier et le au moins un deuxième dispositifs (50; 60) de serrage sont en prise temporaire avec le premier et le au moins un deuxième tubes (10; 20) d'embossage respectivement.

14. Ensemble de tubes d'embossage suivant l'une quelconque des revendications 6 à 12,
dans lequel le premier et le au moins un deuxième dispositifs (50; 60) de serrage sont en prise permanente avec le premier et le au moins un deuxième tubes (10; 20) d'embossage respectivement.

15. Ensemble de tubes d'embossage suivant l'une quelconque des revendications 1 à 14,
dans lequel il est prévu un troisième tube (30) d'embossage et un troisième dispositif (70) de serrage, le troisième dispositif (70) de serrage étant conçu conformément à l'agencement du premier et/ou du deuxième dispositifs (50; 60) de serrage de l'une quelconque des revendications 1 à 14.
